# EUROPÄISCHE PATENTSCHRIFT

(11) **EP 0 669 281 B1**
(45) Veröffentlichungstag und Bekanntmachung des Hinweises auf die Patenterteilung: **08.03.2000**
(21) Anmeldenummer: 95100231.0
(22) Anmeldetag: 10.01.1995
(51) Int. Cl.: B66F 9/20

(54) **Hydraulische Hubvorrichtung für batteriegetriebene Flurförderzeuge**
Hydraulic lifting device for battery-actuated load handling trucks
Dispositif de levage hydraulique pour chariots de manutention actionnés par batterie

(30) Priorität: 29.01.1994 DE 4402653
(43) Veröffentlichungstag der Anmeldung: 30.08.1995
(73) Patentinhaber: Jungheinrich Aktiengesellschaft, 22047 Hamburg (DE)
(72) Erfinder: Baginski, Ralf, Dipl.-Ing., D-21398 Neetze (DE); Claussen, Hans-Peter, Dipl.-Ing., D-22851 Norderstedt (DE); Doss, Hans-Joachim, Dipl.-Ing., D-22297 Hamburg (DE); Klatt, Andreas, Dipl.-Ing., D-22359 Hamburg (DE)
(74) Vertreter: Patentanwälte Hauck, Graalfs, Wehnert, Döring, Siemons

(56) Entgegenhaltungen:
- EP-A- 0 230 884
- EP-A- 0 574 737
- DE-C- 3 018 156
- DE-U- 9 218 483
- DE-U- 9 309 525

## Beschreibung

Die Erfindung bezieht sich auf eine hydraulische Hubvorrichtung für batteriegetriebene Flurförderzeuge nach dem Oberbegriff des Patentanspruchs 1.

Bei derartigen hydraulischen Hubvorrichtungen wird die Druckmittelquelle von einer Konstantpumpe gebildet, die von einem Elektromotor angetrieben ist. Die Drehzahl des Motors wird in Abhängigkeit von der Stellung des Ventilhebels gesteuert. Dadurch wird beim Heben der Last eine Änderung der Hubgeschwindigkeit ohne wesentliche Drosselverluste erreicht. Es ist bekannt, die Senkgeschwindigkeit ebenfalls ventilhebelstellungsabhängig zu machen, und zwar über ein Wegeventil im Senkzweig. Dabei wird die potentielle Energie der Last an der Drosselstelle des Wegeventils in Wärme umgesetzt und mit dem Hydraulikmedium in den Tank abgeführt. Es ist jedoch auch schon bekanntgeworden, die Motorpumpeneinheit während der Senkphase für die Übernahme der Lasthaltefunktion einzusetzen und einen Teil der potentiellen Energie der Last über den generatorisch arbeitenden Elektromotor in die Batterie zurückzuwerfen.

Aus DE 20 14 605, DE 26 18 046, DE 30 18 156 ist bekannt, die Senkgeschwindigkeit über hydraulische Speicher oder über Drosselstellen einzustellen. Alternativ arbeitet der Motor in nur einem Arbeitsgang. Dadurch hat der Elektromotor im generatorischen Bereich nur einen sehr eingeschränkten Betriebsbereich. Aus der US 3 947 744 ist bekannt, im Senkbetrieb den Elektromotor durch eine einfache Feldregelung zu steuern und aus DE 36 02 551 einen Reihenschlußmotor zu verwenden, der in einem eingeschränkten Betriebsbereich arbeitet. Die Betriebsbereiche, die nicht über den generatorisch betriebenen Elektromotor abgedeckt werden, müssen weiter über hydraulische Drosselstellen abgedeckt werden, wobei die potentielle Energie der Last naturgemäß nicht nutzbar ist.

Bei Flurförderzeugen sind meistens zusätzliche Verbraucher mit hydraulischem Druck zu versorgen. Es ist bekannt, diese hydraulischen Verbraucher ebenfalls über die Hydraulikpumpe zu bedienen, indem für die Versorgung der Nebenfunktionen ein konstanter Drehzahlwert eingestellt wird, zu dem dann die ventilhebelstellungsabhängige Drehzahlkomponente zur Versorgung der Hubfunktion addiert wird. Im Senkbetrieb kann die Hydraulikpumpe nicht gleichzeitig als Generator arbeiten und die Nebenfunktionen versorgen. Es ist daher aus der US 3 947 744 auch bekannt, zur Versorgung der Nebenfunktionen eine zusätzliche Motorpumpeneinheit vorzusehen.

Aus DE-U-93 09 525 ist eine hydraulische Hubvorrichtung der eingangs genannten Art bekannt geworden, bei der eine im Lastsenkbetrieb von einer Gleichstrommaschine gespeiste Nutzbremsschaltung vorgesehen ist. Eine Ventilanordnung im Druckmittelweg zwischen dem Hubzylinder und dem Hydraulikaggregat steuert die Zufuhr zum Hubzylinder. Sie ist so ausgebildet, daß sie wahlweise ein Lasthalteventil mit dem Hubzylinder verbindet oder mit einem Nebenverbraucher. Eine die Ventilanordnung steuernde Steuervorrichtung umfaßt eine Drehzahl der Gleichstrommaschine beeinflussende Drehzahlregeleinrichtung. Die Gleichstrommaschine ist fremderregt, und es ist eine separate Feldstromregeleinrichtung vorgesehen mit einem Sollwertgeber, der aus vorgegebenen Beziehungen von Drehzahl und Ankerstrom den Sollwert für den Feldstrom ermittelt. Der Feldwicklung und dem Anker sind von der Regeleinrichtung stellbare Leistungsschalter zugeordnet, deren Anordnung und Ansteuerung die Größe und die Richtung des Stroms durch Anker und Feldwicklung vorgeben. Die Steuervorrichtung weist einen Richtungsgeber für Heben und Senken auf, dessen Signale auf das Lasthalteventil steuern.

Der Erfindung liegt die Aufgabe zugrunde, eine hydraulische Hubvorrichtung für batteriegetriebene Flurförderzeuge zu schaffen, bei der die Antriebsmaschine für die Hydraulikpumpe über den gesamten Arbeitsbereich, den die hydraulische Anlage beim Heben und Senken der Last erfordert, betrieben wird, ohne daß zur Versorgung der Nebenfunktionen eine zusätzliche Motorpumpeneinheit nötig wird.

Diese Aufgabe wird durch die Merkmale des Patentanspruchs 1 gelöst.

Die elektrische Maschine der Erfindung kann eine fremderregte Gleichstrommaschine sein, die nach einer Ausgestaltung der Erfindung eine Regelung der Erreger- und Ankerspannung unabhängig voneinander vorsieht. Zu diesem Zweck kann eine separate Feldstromregelungseinrichtung vorgesehen werden mit einem Sollwertgeber, der aus vorgegebenen Beziehungen von Drehzahl und Ankerstrom den Sollwert für den Feldstrom ermittelt, wobei der Feldwicklung und dem Anker von der Regeleinrichtung stellbare Leistungsschalter zugeordnet sind, deren Anordnung und Ansteuerung die Größe und die Richtung des Stroms durch Anker und Feldwicklung vorgeben und die Steuervorrichtung einen Richtungsgeber für Heben und Senken aufweist.

Erfindungswesentlich ist, daß der Senkzweig zwischen der Ventilanordnung und einer Verbindung zwischen einem Rückschlagventil und dem Eingang der Hydraulikpumpe vorgesehen ist, wobei für den weiteren hydraulischen Verbraucher die Hydraulikpumpe sorgt. Dadurch wird die Maschine stets in der gleichen Drehrichtung betrieben unabhängig davon, ob Hub- oder Senkbetrieb vorliegt. Der hydraulische Verbraucher kann dann direkt mit der hydraulischen Energie aus dem Senkvorgang versorgt werden, so daß Wirkungsgradverluste über zusätzliche Energiewandlungen vermieden werden.

Bei der Erfindung erfolgt eine lastunabhängige Steuerung der Senkgeschwindigkeit sowohl im generatorischen Betrieb der Maschine als auch bei einer Steuerung allein über die Ventilanordnung. Die Lasthaltefunktion kann durch das handbetätigte Steuerventil realisiert werden, das stetig verstellbar ist und daher eine sehr feinfühlige Regulierung der Hub- und Senkgeschwindigkeit ermöglicht.

Der Normalfall beim Senken ist der, daß die Versorgung des zusätzlichen hydraulischen Verbrauchers durch die hydraulische Energie aus dem Senkvorgang stattfinden kann. Der überschüssige Volumenstrom wird dann in den Tank abgeführt. Es ist jedoch auch denkbar, daß während des Senkvorgangs zwar der Druck größer ist als für die Versorgung des zusätzlichen Verbrauchers erforderlich, jedoch ein zu kleiner Volumenstrom bereit steht. Die Drehzahlregelung bewirkt, daß der Elektromotor die Pumpe antreibt. Um zu verhindern, daß dadurch die Senkgeschwindigkeit zu groß wird, sieht eine Ausgestaltung der Erfindung im Senkzweig einen hydraulischen Volumenstrombegrenzer vor, der den Volumenstrom aus dem Hydraulikzylinder am Eingang auf einen über die Ventilhebelstellung vorgegebenen Wert begrenzt. Dieser kann von einer Druckwaage gebildet sein, die vom Volumenstrom und dem Eingangsdruck der Steuerventilanordnung gesteuert wird. Bei dieser Konstellation ist sichergestellt, daß die Senkgeschwindigkeit annähernd konstant bleibt. Sowie die Durchflußmenge in der Druckwaage einen bestimmten Wert im Verhältnis zur Ventilhebelstellung am Steuerventil überschreitet, beginnt die Druckwaage zu regeln. Sie arbeitet in Verbindung mit der Drosselstelle im Steuerventil wie ein Zweiwegemengenregler und hält so die eingestellte Senkgeschwindigkeit konstant. Auf diese Weise wird ferner sichergestellt, daß die Hydraulikpumpe über das Rückschlagventil ansaugen kann. Vorzugsweise wird bei dieser Betriebsart eine konstante Drehzahl geregelt, die so bemessen ist, daß der von der Pumpe geförderte Volumenstrom ausreicht, den maximalen Volumenstrombedarf des zusätzlichen Verbrauchers zu decken. Eine ventilhebelstellungsabhängige Geschwindigkeit oder Drehzahl des zusätzlichen Verbrauchers wird über ein zusätzliches Steuerventil eingestellt, wobei der überschüssige Volumenstrom in den Tank zurückgeleitet wird.

Schließlich kann auch der Fall eintreten, daß sowohl der Druck als auch der Volumenstrom während des Senkvorgangs kleiner ist als für die Nebenfunktion erforderlich. Für diesen Fall sieht eine Ausgestaltung der Erfindung die Anordnung eines Schaltventils zwischen Druckbegrenzer und Hydraulikpumpe vor. Das Schaltventil lenkt das Hydraulikmedium direkt zum Tank, wenn Druck und Volumen im Senkzweig kleiner sind als für die Versorgung des hydraulischen Verbrauchers erforderlich. Die Kombination aus Druckwaage und Schaltventil arbeitet dann wie ein Zweiwegemengenregler. Die Versorgung des zusätzlichen hydraulischen Verbrauchers erfolgt in gleicher Weise, wie bereits beschrieben.

Das Hubgerüst eines hydraulischen Förderzeugs besteht u. a. aus einem Freihubzylinder und mindestens einem Masthubzylinder. Das Ölvolumen des Freihubzylinders wird beim Senkvorgang erst entleert, nachdem der Masthubzylinder ganz eingefahren ist und damit kein Ölvolumen mehr enthält. Dadurch entsteht ein Übergang zwischen dem Senkvorgang im Masthub und im Freihub. Durch die unterschiedlichen Zylinderflächen im Masthub und Freihub entstehen bei gleicher Generatordrehzahl unterschiedliche Senkgeschwindigkeiten. Um dies auszugleichen, wird nach einer Ausgestaltung der Erfindung sensiert, ob sich das Hubgerüst im Mast- oder Freihubbereich befindet, und es werden dann Proportionalitätsfaktoren zwischen Senkgeschwindigkeitssollwert und Motordrehzahl in der Steuerung verändert, so daß die gleiche Senkgeschwindigkeit im Mast- und Freihub erreicht wird.

Aus "Microprocessor-based High-Efficiency Drive of a DC Motor" aus IEEE Transactions on Industrial Electronics Vol. IE 34 No. 4. November 1987, Seiten 433 bis 440 ist bekanntgeworden, Anker und Feld einer Gleichstrommaschine dadurch zu steuern bzw. zu regeln, daß der Sollwert für den Feldstrom aus vorgegebenen Beziehungen von Drehzahl und Ankerstrom, hier des Ankerstromistwerts, ermittelt wird. Hierzu ist ein entsprechender Algorithmus bzw. eine entsprechende Tabelle vorzusehen.

Die Steuerung bzw. die Sollwertvorgabe für die Hubvorrichtung erfolgt durch ein elektrisches Signal, beispielsweise über ein handbetätigtes Potentiometer, wobei zusätzlich ein Richtungsgeber vorzusehen ist, dessen Signale den Betriebsvorgang Heben bzw. Senken anzeigen. In dem Augenblick, in dem über die Steuerventilanordnung der Hydraulikstrom im Senkzweig zu fließen beginnt, treibt die Hydraulikpumpe die als Generator wirkende Gleichstrommaschine an. Da jedoch der Sollwert für die Drehzahl noch Null ist, versucht die Regelung diesen Wert zu erreichen, wodurch der zugehörige Leistungsschalter für den Anker komplett durchschaltet. Die Leistungsschalter für die Feldwicklung werden so betrieben, daß der Strom maximal ist. Dadurch wird ein maximales Bremsmoment erzeugt, das ausreichend ist, die Last mit minimaler Geschwindigkeit abzusenken, falls dies gewünscht wird. Durch entsprechende Sollwertvorgabe für die Drehzahl läßt sich andererseits die Hebe- und Senkgeschwindigkeit auf den gewünschten Wert einstellen.

In einer bevorzugten Ausgestaltung der Erfindung ist vorgesehen, daß der Feldstrom-Sollwertgeber den Sollwert für den Feldstrom aus dem Ankerstromsollwert und der Istdrehzahl ermittelt. Dies hat den Vorteil, daß die Drehzahlregelung auch in dem Betriebsbereich arbeiten kann, in dem eine höhere Ankerspannung vorsehbar ist als sie bei der Batteriespannung notwendig ist, um mit optimalem Wirkungsgrad generatorisch zu senken.

Anstelle einer fremderregten Gleichstrommaschine kann auch eine DrehstromAsynchronmaschine verwendet werden, die über einen Frequenzumrichter entsprechend gespeist ist. Eine Drehzahlregeleinrichtung ermittelt mit Hilfe eines Drehzahlmessers die Ist-Läuferfrequenz der Maschine und bildet eine Regelabweichung mit einem Drehzahlsollwert bzw. Frequenzsollwert, um sowohl für das Heben als auch das Senken die gewünschte Drehzahl zu erreichen. Je nachdem, ob die Differenz aus Ist- und Sollfrequenz einen positiven oder einen negativen Schlupf anzeigt, arbeitet die Asynchronmaschine als Motor oder Generator. Die Rückspeisung von elektrischer Energie in die Batterie erfolgt automatisch, ohne daß besondere Vorkehrungen zu treffen sind.

Die Erfindung wird nachfolgend anhand von Zeichnungen näher erläutert.
- Fig. 1: zeigt eine hydraulische Hubvorrichtung nach der Erfindung.
- Fig. 2: zeigt ein Blockschaltbild zur Regelung der Hubvorrichtung nach Fig. 1
- Fig. 3: zeigt ein Blockschaltbild der Leistungsteile der Gleichstrommaschine nach Fig. 1 bzw. Fig. 2.
- Fig. 4 bis 6: zeigen Diagramme von verschiedenen Steuersignalen der erfindungsgemäßen Hubvorrichtung.
- Fig. 7: zeigt eine Handbetätigung für die Hubvorrichtung nach der Erfindung.
- Fig. 8: zeigt ein Blockschaltbild zur Regelung einer Hubvorrichtung ähnlich der nach Fig. 1 mit einer Drehstrom-Asynchronmaschine.
- Fig. 9: zeigt ein Blockschaltbild des Leistungsteils der Asynchronmaschine nach Fig. 8.

Eine fremderregte Gleichstrommaschine 10 treibt eine Hydraulikpumpe 12 an, die wahlweise als Motor arbeitet. Die Pumpe 12 saugt aus einem Tank 14 über ein Rückschlagventil 16 Hydraulikmedium an und fördert es über eine Steuerventilanordnung 18 zu einem Hubzylinder 20 bzw. zu einer Gruppe von Nebenfunktionen 22. Die Ventilanordnung 18 ist handbetätigt. Für die Betätigung des Hubzylinders 20 ist beispielsweise ein Handhebel 24 vorgesehen. Für die Betätigung der Nebenfunktionen 22 sind zusätzliche nicht gezeigte Handhebel vorgesehen. Eine später noch zu beschreibende Drehzahlregeleinrichtung ist so eingestellt, daß zunächst eine konstante Drehzahl des Gleichstrommotors 10 für die Versorgung der Nebenfunktionen 22 dient. Überschüssiger Volumenstrom wird dann über eine Leitung 26 und ein Filter 29 in den Tank 14 zurückgeleitet. Drehzahlabhängig erfolgt dann das Heben bzw. Senken des Hubzylinders 20. Das Senken erfolgt über die Betätigung des Handhebels 24, wobei ein Senkzweig 28 die Steuerventilanordnung 18 mit einem Punkt zwischen der Pumpe 12 und dem Rückschlagventil 16 verbindet. Der Volumenstrom beim Senkvorgang treibt die Hydraulikpumpe 12 in gleicher Richtung an wie sie als Pumpe betrieben wird, so daß sie als Hydraulikmotor die Gleichstrommaschine 10 antreibt, die mithin generatorisch arbeitet, um die potentielle Energie aus dem Hubzylinder in elektrische Energie umzuwandeln und die Batterie mit elektrischer Energie aufzuladen. Im Senkzweig 28 ist eine hydraulische Druckwaage 30 angeordnet sowie ein Schaltventil 32, das, wenn es vom Betätigungsmagneten 34 unbetätigt ist, in der Offenstellung sich befindet. Wird es hingegen betätigt, verbindet es den oberen Teil des Senkzweigs 28 über eine Leitung 36 mit der Leitung 26 und damit zum Tank 14. Die hydraulische Waage 30 wird über einen Steuereingang mit dem Druck im Senkzweig zwischen Hubzylinder 20 und Steuerventil 18 beaufschlagt, wie durch die gestrichelte Linie 36a angedeutet. Die hydraulische Waage wird mit dem Differenzdruck, der über das Ventil 18 abfällt und der ventilhebelstellungsabhängig ist, beaufschlagt. Wird der Differenzdruck größer als ein vorgegebener Wert, regelt die Druckwaage und über das Ventil 30 fällt der Lastdruck ab, so daß an der Pumpe 12 Umgebungsdruck herrscht und Volumenstrom aus dem Tank gepumpt werden kann. Übersteigt der Volumenstrom in der Druckwaage 30 einen durch das Handventil 18 vorgegebenen Wert, wird eine Begrenzung vorgenommen, so daß der Volumenstrom beim Umschalten des Ventils 32 nicht schlagartig ansteigt, wobei die Pumpe 12, sollte sie von der Gleichstrommaschine 10 angetrieben werden, Hydraulikmedium aus dem Tank 14 ansaugen kann.

Das Heben des Hubzylinders 20 sowie die Versorgung der Nebenfunktionen sind bereits beschrieben worden. Auch der Senkvorgang wurde im wesentlichen erläutert. Die ventilhebelstellungsabhängige Regelung der Drehzahl des Motors 10 ist direkt proportional der Senkgeschwindigkeit, von vernachlässigbaren Leckverlusten der Pumpe 12 abgesehen. Wird während der Senkphase eine Nebenfunktion 22 angefordert, dann wird das Fluid im Steuerventil 18 auf den erforderlichen Druck der Nebenfunktion angedrosselt. Die Nebenfunktion wird direkt aus der im Senkvorgang frei werdenden Energie versorgt, wenn Druck und Volumenstrom ausreichend sind. Dies ist normalerweise immer der Fall, wenn mit Last abgesenkt wird. Ein Reversieren der Pumpe 12 entfällt. Reichen Druck und Volumenstrom aus dem Senkvorgang aus, die Nebenfunktionen zu versorgen, erfolgt eine unmittelbare hydraulische Versorgung mit dem Volumenstrom des Senkvorgangs, wobei der überschüssige Volumenstrom über die Steuerventilanordnung 18 in den Tank 14 abgeführt wird.

Sobald eine Nebenfunktion angefordert wird, vergleicht die Steuerung die Motoristdrehzahl, resultierend aus der Senkgeschwindigkeit mit der Solldrehzahl, entsprechend dem Volumenstrombedarf der Nebenfunktion. Übersteigt der Volumenstrombedarf der Nebenfunktion das Angebot aus dem Senkvorgang, dann wird die Motordrehzahl entsprechend erhöht. Für diese Konstellation muß sichergestellt werden, daß die Senkgeschwindigkeit annähernd konstant bleibt. Dies wird, wie erwähnt, durch die Druckwaage 30 bewerkstelligt im Zusammenwirken mit der veränderlichen Drosselstelle in der Steuerventilanordnung 18. Sobald die Durchflußmenge an der Druckwaage 30 einen bestimmten Wert im Verhältnis zur Ventilhebelstellung am Ventil 18 überschreitet, beginnt die Druckwaage 30 zu regeln. Sie arbeitet nun in Verbindung mit der Drosselstelle im Ventil 18 wie ein Zweiwegemengenregler und hält so die eingestellte Senkgeschwindigkeit konstant. Dadurch ist gewährleistet, daß der Druck aus dem Senkvorgang an der Druckwaage 30 abgebaut und ein Nachsaugen über das Ventil 16 und damit die Versorgung der Nebenfunktion 22 sichergestellt ist. Der Motor 10 wird mit konstanter Drehzahl betrieben, die so bemessen ist, daß der von der Pumpe 12 geförderte Volumenstrom ausreicht, den maximalen Volumenstrombedarf der Nebenfunktionen zu decken. Eine ventilhebelstellungsabhängige Nebenfunktionsgeschwindigkeit wird über eine hebelbetätigte Drosselstelle in der Steuerventilanordnung 18 ermöglicht. Überschüssiger Volumenstrom wird über den Filter 29 in den Tank 14 zurückgeleitet.

Ist der Druck aus dem Senkvorgang kleiner und der Volumenstrom kleiner oder größer als für die Nebenfunktion erforderlich, wird das Schaltventil 32 ausgeschaltet und das Fluid über den Filter 29 direkt in den Tank 14 geleitet. Die Senkgeschwindigkeit wird über die Druckwaage 30 in Verbindung mit der über den Ventilhebel veränderbaren Drosselstelle in der Steuerventilanordnung 18 konstant gehalten. Diese Kombination arbeitet wie ein Zweiwegemengenregler. Die Versorgung der Nebenfunktion 22 erfolgt über den Gleichstrommotor 10 und die Hydraulikpumpe 12, wie oben beschrieben.

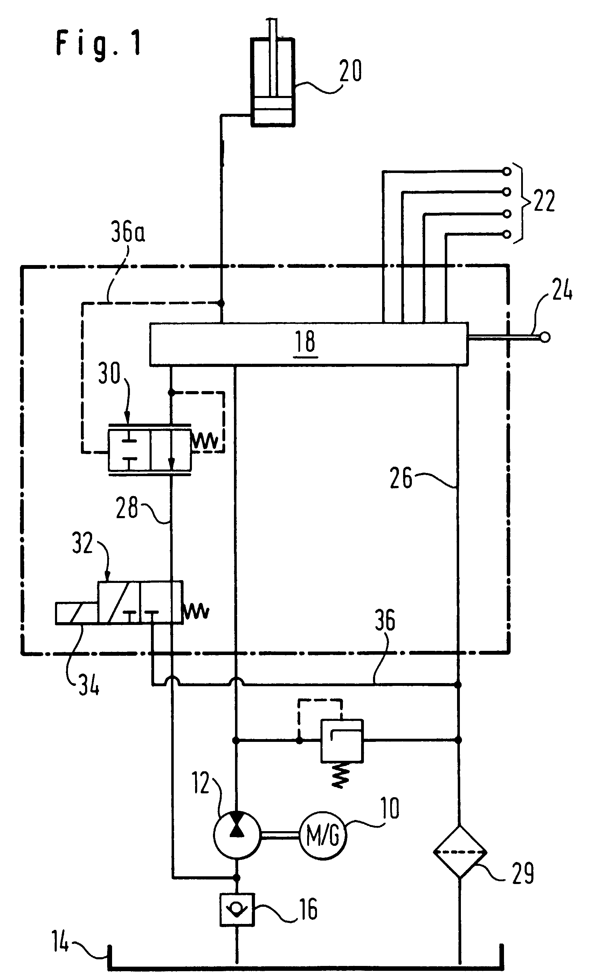

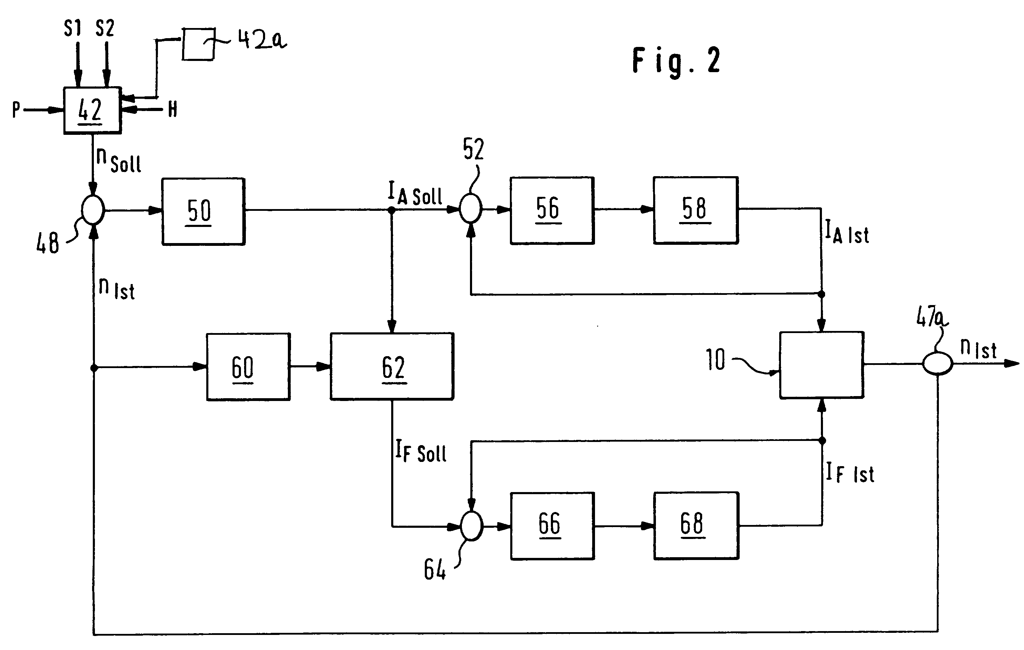

Die Drehzahlregelung der fremderregten Gleichstrommaschine 10 der Vorrichtung nach Fig. 1 wird anhand der Figuren 2 bis 7 näher erläutert.

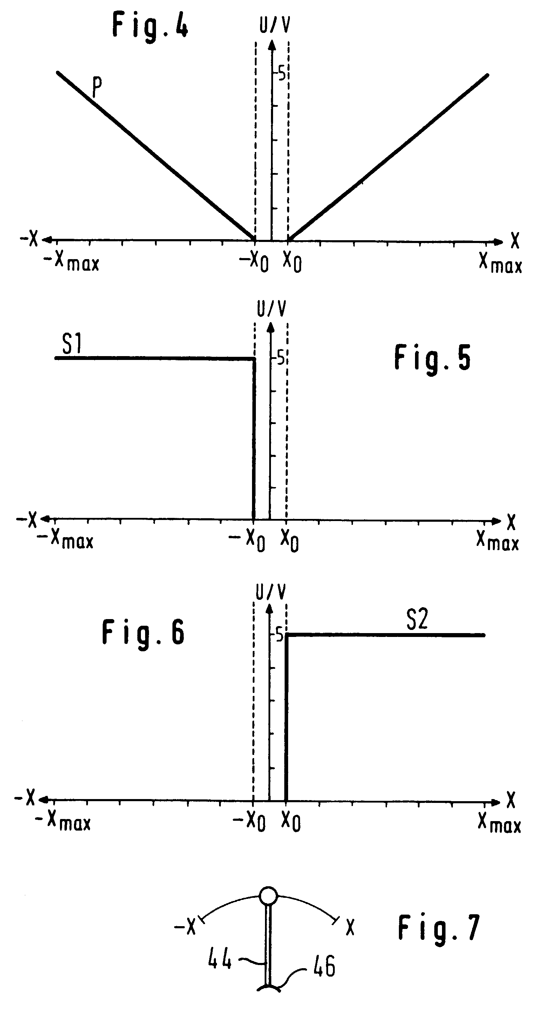

Fig. 7 zeigt einen Handhebel 44, der nach links und rechts verschwenkbar ist, wobei das Ausmaß der Verschwenkung mit -X bzw. +X angegeben ist. Er betätigt ein bei 46 angedeutetes Potentiometer, das in Abhängigkeit von der Auslenkung ein Signal P erzeugt. Das Signal P ist in Fig. 4 angegeben. Die auslenkungsabhängigen Signale in Fig. 4 unterscheiden sich nicht durch das Vorzeichen, daher ist dem Hebel 44 ein Paar Mikroschalter (nicht gezeigt) zugeordnet, welche das Vorzeichen des Signals P vorgeben. Dies ist durch die Signale S1 und S2 in Fig. 5 bzw. Fig. 6 angedeutet. Ein Drehzahlsollwertgeber 42 errechnet aus den Signalen P, S1 und S2 einen Drehzahlsollwert n_{Soll}, wobei der Absolutwert von P den Absolutwert von n_{Soll} bestimmt und die Signale S1 bzw. S2 das entsprechende Vorzeichen. Falls vom Geber 42 ein Signal erhalten wird, wird der Drehzahlsollwert entsprechend modifiziert, um eine konstante Senkgeschwindigkeit beizubehalten. (Hierauf wird weiter unten noch näher eingegangen). Ein mit der Gleichstrommaschine 10 verbundener Drehzahlsensor 47a liefert einen Drehzahlistwert n_{Ist} auf einen Sollistwertvergleich 48, und die Regelabweichung wird auf einen Drehzahlregler 50 gegeben. Er bildet einen Sollwert für den Ankerstrom I_{ASoll}, der in einem Sollistwertvergleich 52 mit dem Ankerstromistwert I_{AIst} verglichen wird. Die Regelabweichung gelangt auf einen Ankerstromregler 56 und von dort auf einen mit 58 angedeuteten Stellwertgeber.

In einer Wertetabelle 60 sind Beziehungen zwischen Drehzahl und Ankerstrom gespeichert. In einer entsprechenden Rechenstufe 62 wird aus den Daten der Tabelle 60 der Sollwert für die Feldwicklung I_{FSoll} errechnet. Wesentlich ist dabei, daß zur Berechnung der Ankerstromsollwert I_{ASoll} herangezogen wird. Der Sollwert I_{FSoll} wird in einem Istsollwert-Vergleich 64 mit dem Feldstromistwert verglichen, wobei die Regelabweichung auf einen Feldstromregler 66 gegeben wird, der ein entsprechendes Stellsignal im Stellwertgeber 68 erzeugt. Die Regler 56, 66 sind als digitale Regler ausgebildet und erzeugen über nachgeschaltete Leistungsteile 58, 68 pulsweitenmodulierte Spannungen, über die die vorgegebenen Stromwerte I_{ASoll} und I_{FSoll} eingeregelt werden. Dadurch, daß als Eingangsgröße zur Errechnung des Feldstromsollwerts I_{FSoll} neben dem Drehzahlistwert n_{Ist} der Ankerstromsollwert I_{ASoll} herangezogen wird, kann auch in einem Betriebsbereich gearbeitet werden, in dem eine höhere Ankerspannung als die Batteriespannung U_{Batt} notwendig wäre, um mit optimalem Wirkungsgrad generatorisch zu senken, wie noch beschrieben wird.

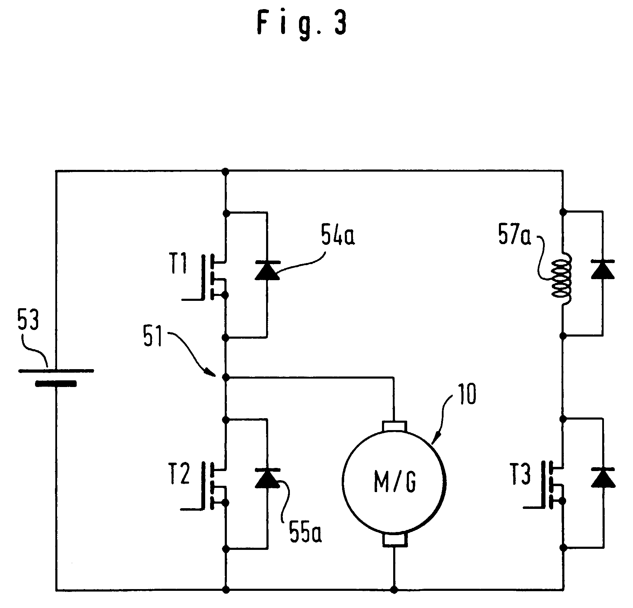

Wie aus Fig. 3 hervorgeht, liegt der Anker der fremderregten Gleichstrommaschine 10 über eine aus den Mosfets T1 und T2 bestehende Halbbrücke 51 an einer Batterie 53. Dioden 54a, 55a liegen antiparallel zu den Mosfets T1 und T2. Die Feldwicklung 57a liegt in Reihe mit dem Mosfet T3 parallel zur Halbbrücke 51 an den Klemmen der Batterie 53, wobei eine Diode antiparallel zur Feldwicklung 57a bzw. zum Mosfet T3 liegt.

Die Mosfets Tl und T2 werden zyklisch angesteuert, d. h. Mosfet Tl ist ausgeschaltet, wenn T2 eingeschaltet ist und umgekehrt. Die Größe des Stromflusses ergibt sich somit aus dem Tastverhältnis der Impulse für die Mosfets Tl und T2. Gleiches gilt für das Mosfet T3. Mosfet Tl arbeitet im motorischen Hubbetrieb als sogenannter Tiefsetzsteller und Mosfet T2 im generatorischen Senkbetrieb als Hochsetzsteller.

Wird der Hebel 44 aus der Ruhelage in Richtung Senken so weit ausgelenkt, daß die Anforderung der Senkfunktion über das Signal S2 erzeugt wird, andererseits das Signal P noch einen Drehzahlsollwert von n_{Soll} = 0 meldet, bewirkt das Signal S2 ein Öffnen des Ventils 18, wodurch Hydraulikvolumen durch die Pumpe 12 strömt und die Gleichstrommaschine 10 antreibt. Durch die auf diese Weise auftretende ständige Regelabweichung wird ein I_{ASoll} auf den Sollistwertvergleich 52 gegeben, und der Ankerstromregler 56 sorgt dafür, daß der Anker über Mosfet T2 kurzgeschlossen ist. Außerdem wird die Feldwicklung 57a mit maximalem Feldstrom versorgt. Der sich nun einstellende Drehzahlwert ist so klein, daß die sich einstellende kleinstmögliche Senkgeschwindigkeit ausreicht, um ein feinfühliges Senken des Hubzylinders 20 zu gewährleisten. In diesem Betriebspunkt der Gleichstrommaschine 10 wird indessen keine Energie in die Batterie 53 zurückgespeist.

Wird indessen durch eine weitere Auslenkung des Ventilhebels ein Drehzahlsollwert n_{Soll} > 0 eingestellt, nimmt der Regler 56 die Pulsweite des Mosfets T2 von der 100%igen Ansteuerung zurück, bis sich die gewünschte Drehzahl n_{Soll} einstellt. Der Mosfet T2 arbeitet nun bei jeder Pulsweite < 100 % im Hochsetzstellerbetrieb, und es wird Energie in die Batterie 53 zurückgespeist.

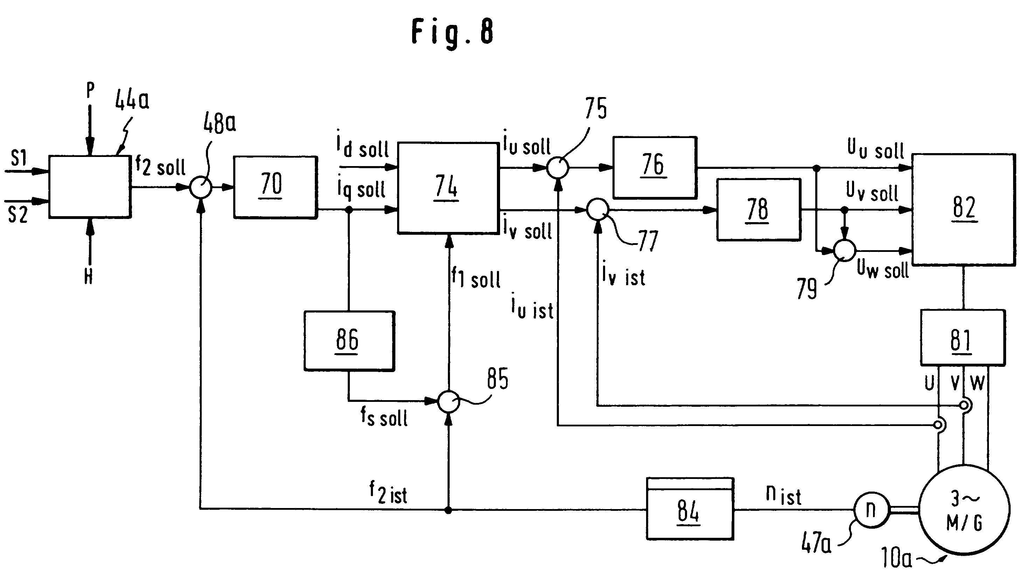

In Fig. 8 erzeugt ein Drehzahlsollwertgeber 44a aus den Signalen P, S1 und S2 einen Läuferfrequenzsollwert f₂ₛₒₗₗ für eine Drehstromasynchronmaschine 10a, die anstelle der fremderregten Gleichstrommaschine nach Fig. 1 in die dort gezeigte Schaltung eingesetzt werden kann. Das in den Sollwertgeber 44a eingespeiste Signal P entspricht dem Ausmaß der Auslenkung z. B. des Handhebels nach Fig. 7. Das Vorzeichen des Signals wird durch Mikroschalter (nicht gezeigt) angegeben, die dem Handhebel 44 zugeordnet sind. Das Vorzeichen wird mithin durch die Signale S1 und S2 bestimmt. Ein mit der Maschine 10a verbundener Drehzahlsensor 47a liefert einen Drehzahlistwert n_{Ist}, der auf eine Rechenstufe 84 gegeben wird, die entsprechend der Polpaarzahl p der Maschine 10a den Istwert f₂ᵢₛₜ der Läuferfrequenz errechnet. Der Frequenzistwert wird auf den Sollistwertvergleich 48a gegeben, und die Regeldifferenz gelangt auf einen Drehzahlregler 70.

Der Drehzahlregler 70 erzeugt einen Sollwert für den Wirkanteil i_{qsoll} des komplexen Stromraumzeigers i. Der Wirkanteil i_{qsoll} ist proportional zum Drehmoment der Asynchronmaschine 10a. Der Wert i_{dsoll} ist der Sollwert des Blindanteils des Stromraumzeigers i, der dem Magnetisierungsstrom der Asynchronmaschine proportional ist. Aus dem Sollwert des Wirkanteils i_{qsoll} des Stromraumzeigers i wird der Sollwert für die Schlupffrequenz fₛₛₒₗₗ bei 86 ermittelt. In 86 kann eine Tabelle abgelegt sein, welche die Beziehung herstellt zwischen dem Wirkstrom und der Schlupffrequenz. Es ist auch denkbar, in 86 ein Ersatzschaltbild der Asynchronmaschine abzulegen und mit dessen Hilfe relativ genau die jeweilige Schlupffrequenz zu ermitteln.

Die ermittelte Schlupffrequenz fₛₛₒₗₗ wird bei 85 dem Läuferfrequenzistwert f₂ᵢₛₜ hinzuaddiert. Daraus ergibt sich der Ständerfrequenzsollwert f₁ₛₒₗₗ, der einer Drehtransformation 74 zugeführt wird. Der sich aus i_{qsoll}, i_{dsoll} und f₁ₛₒₗₗ ergebende Stromraumzeiger i wird auf die Stranggrößen transformiert, und es ergeben sich die Sollwerte für die Strangströme iᵤₛₒₗₗ und iᵥₛₒₗₗ. Die jeweiligen Regeldifferenzen, die sich durch Subtraktion der jeweiligen Stromistwerte iᵤᵢₛₜ und iᵥᵢₛₜ an den Additionsstellen 75 und 77 ergeben, werden auf die Stromregler 76 und 78 gegeben, die die Stellgrößen für die Strangspannungen Uᵤₛₒₗₗ und Uᵥₛₒₗₗ ausgeben. Der Sollwert der dritten Strangspannung U_{wsoll} kann aus der Bedingung, daß die Summe aller drei Spannungen zu Null ergeben muß, an der Additionsstelle 79 errechnet werden.

Die drei Spannungsstellwerte werden nun in Pulsweitenmodulationssignale umgesetzt im Block 82, welche einen Leistungsteil 81 so ansteuern, daß sich die gewünschten Stromwerte in der Asynchronmaschine 10a ergeben.

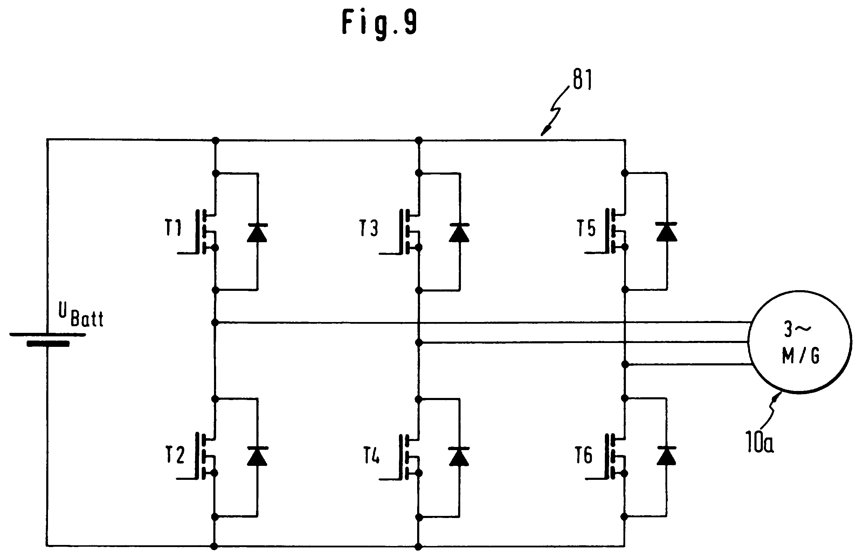

Einzelheiten des Leistungsteils 81 gehen aus dem Blockschaltbild nach Fig. 9 hervor.

In Fig. 9 ist zu erkennen, daß jeweils ein Strang der Asynchronmaschine 10a an einem Verbindungspunkt eines Paars von in Serie geschalteten und an Batteriespannung U_{Batt} liegenden Mosfets liegt, die mit T1 bis T6 bezeichnet sind. Die Transistoren T1 bis T6 werden mit einer sinusbewerteten Pulsweite betrieben und paarweise antizyklisch angesteuert. Die Ansteuerung der drei Transistorpaare ist so gestaltet, daß die sinusbewerteten weitenmodulierten Ansteuersignale in der Frequenz der Sinusbewertung um je 120° phasenverschoben auf die Transistorpaare gegeben werden. Bei dieser Ansteuerung wird in der Asynchronmaschine 10a ein umlaufendes Drehfeld erzeugt, das frequenz- und spannungsvariabel ist.

Aus dem Vergleich der Frequenzen fₛₛₒₗₗ und f₂ᵢₛₜ ergibt sich aus dem Vorzeichen der Sollfrequenz fₛₛₒₗₗ, ob die Asynchronmaschine 10a im Motor- oder Generatorbetrieb arbeitet. Mithin erfolgt automatisch ohne weitere Vorkehrungen eine Rückspeisung in die Batterie nach Fig. 9, wenn die Asynchronmaschine 10a generatorisch betrieben wird.

Wird der Hebel 44 in Fig. 7 aus der Ruhelage in Richtung Senken so weit ausgelenkt, daß die Anforderung der Senkfunktion über das Signal S₂ erzeugt wird, andererseits das Signal P noch einen Läuferfrequenzsollwert f₂ = Null meldet, strömt Hydraulikmedium durch das Hydraulikaggregat und treibt die Asynchronmaschine 10a an. Der Regler regelt nun auf die untere Regelgrenze, die kleinste mögliche Ständerfeldfrequenz, die ungefähr bei 0,2 Hz liegt, ein. Durch den Schlupf in der Asynchronmaschine 10a ergibt sich eine ständige Regelabweichung. Der sich einstellende Drehzahlwert ist so klein, daß die sich einstellende kleinstmögliche Senkgeschwindigkeit ausreicht, um ein feinfühliges Senken des Hubzylinders 20 (Fig. 1) zu gewährleisten.

Dem in Fig. 1 nicht gezeigten Mast ist ein Sensor 42a zugeordnet, der ermittelt, ob der Mast oder das Lasttragmittel im Senkvorgang abgesenkt wird. Wie aus Fig. 2 zu erkennen, wird ein entsprechendes Signal vom Sensor 42a auf den Sollwertgeber 42 gegeben zwecks Verarbeitung und Bildung des Sollwertsignals, wie dies weiter oben bereits beschrieben wurde.

## Patentansprüche

1. Hydraulische Hubvorrichtung für batteriegetriebene Flurförderzeuge, mit mindestens einem hydraulischen Hubzylinder (20), einem im Lasthebebetrieb als Pumpe arbeitenden, den Hubzylinder (20) mit Druckmittel beschickenden und im Lastsenkbetrieb als Motor arbeitenden, von dem vom Hubzylinder (20) verdrängten Druckmittel angetriebenen Hydraulikpumpe (12), einer mit der Hydraulikpumpe (12) gekuppelten, im Lasthebebetrieb als Elektromotor und im Lastsenkbetrieb als Generator arbeitenden Gleichstrom - oder Drehstromasynchronmaschine (10, 10a), einer im Lastsenkbetrieb von der Maschine (10, 10a) gespeisten Nutzbremsschaltung, einer Ventilanordnung (18) im Druckmittelweg zwischen dem Hubzylinder (20) und der Hydraulikpumpe (12), einer die Ventilanordnung steuernden Steuervorrichtung, die eine die Drehzahl der Maschine (10, 10a) beeinflussenden Drehzahlregeleinrichtung umfaßt, und mindestens einen weiteren hydraulischen Verbraucher, der über ein zugeordnetes Steuerventil an eine Hydraulikpumpe anschließbar ist, wobei der weitere hydraulische Verbraucher (22) über die Ventilanordnung (18) von der Hydraulikpumpe (12) versorgt wird und die elektrische Maschine von der Drehzahlregeleinrichtung in Abhängigkeit von der Betätigung der Ventilanordnung (18) in ihrer Drehzahl geregelt wird, dadurch gekennzeichnet, daß der Senkzweig (28) zwischen der Ventilanordnung (18) und einer Verbindung zwischen einem Rückschlagventil (16) und dem Eingang der Hydraulikpumpe (12) vorgesehen ist.

2. Hubvorrichtung nach Anspruch 1, dadurch gekennzeichnet, daß die elektrische Maschine (10) eine fremderregte Gleichstrommaschine ist.

3. Hubvorrichtung nach Anspruch 1 oder 2, dadurch gekennzeichnet, daß im Senkzweig (28) ein hydraulischer Druckbegrenzer (30) angeordnet ist, an dem in bestimmten Betriebspunkten der gesamte Hydraulikdruck abfällt, so daß er die Last übernimmt.

4. Hubvorrichtung nach Anspruch 3, dadurch gekennzeichnet, daß der Druckbegrenzer von einer vom Volumenstrom und dem Differenzdruck der Ventilanordnung (18) gesteuerten Druckwaage (30) gebildet ist.

5. Hubvorrichtung nach Anspruch 3 oder 4, dadurch gekennzeichnet, daß zwischen dem Druckbegrenzer (30) und der Hydraulikpumpe (12) ein Schaltventil (32) im Senkzweig (28) angeordnet ist, das in einer Schaltstellung den Senkzweig (28) mit dem Sumpf (14) der Hydraulikpumpe (12) verbindet, wenn Druck oder Volumen im Senkzweig kleiner sind als für die Versorgung des weiteren hydraulischen Verbrauchers (22) erforderlich.

6. Hubvorrichtung nach einem der Ansprüche 2 bis 5, dadurch gekennzeichnet, daß eine separate Feldstromregeleinrichtung (66, 68) vorgesehen ist mit einem Sollwertgeber (62), der aus vorgegebenen Beziehungen von Drehzahl (n_{Ist}) und Ankerstrom (I_{ASoll}) den Sollwert für den Feldstrom (I_{FSoll}) ermittelt, der Feldwicklung (57a) und dem Anker von der Regeleinrichtung stellbare Leistungsschalter (T1 bis T3) zugeordnet sind, deren Anordnung und Ansteuerung die Größe und die Richtung des Stroms durch Anker und Feldwicklung vorgeben und die Steuervorrichtung einen Richtungsgeber (44, 46) für Heben und Senken aufweist.

7. Hubvorrichtung nach Anspruch 6, dadurch gekennzeichnet, daß der Drehzahlsollwertgeber für die Drehzahlregeleinrichtung ein Potentiometer (46) ist, dessen Stellglied (44) Richtungssignale (S1, S2) erzeugende Mikroschalter zugeordnet sind.

8. Hubvorrichtung nach Anspruch 6 oder 7, dadurch gekennzeichnet, daß der Feldstromsollwertgeber (62) den Sollwert für den Feldstrom (I_{FSoll}) aus dem Ankerstromsollwert (I_{ASoll}) und der Istdrehzahl (n_{Ist}) ermittelt.

9. Hubvorrichtung nach einem der Ansprüche 6 bis 8, dadurch gekennzeichnet, daß der Anker über eine Halbbrücke (51) aus Mosfets (T1, T2) an die Batterie (53) angeschlossen ist, wobei den Mosfets (T1, T2) Dioden (54a, 55a) antiparallel geschaltet sind und die Mosfets (T1, T2) zyklisch angesteuert werden.

10. Hubvorrichtung nach Anspruch 1, dadurch gekennzeichnet, daß die elektrische Maschine (10a) eine über einen Frequenzumrichter betriebene Drehstromasynchronmaschine ist und die Drehzahlregeleinrichtung (70) die Ständerfrequenz in Abhängigkeit von der aus dem Drehzahlistwert (n_{Ist}) und dem vorgegebenen Drehzahlsollwert ermittelten Regelabweichung regelt und die Steuervorrichtung einen Richtungsgeber für Heben und Senken aufweist.

11. Hubvorrichtung nach einem der Ansprüche 1 bis 10 für einen Hubmast, mit mindestens einem verfahrbaren Mastteil, dessen Lastaufnahmemittel am verfahrbaren Mastteil höhenverstellbar ist, dadurch gekennzeichnet, daß ein Sensor (42a) am Hubmast vorgesehen ist, der feststellt, ob ein Senkvorgang des verfahrbaren Mastteils (Masthub) oder des Lastaufnahmemittels (Freihub) erfolgt und dessen Signale auf den Drehzahlsollwertgeber (42) gegeben werden zur Modifizierung des Drehzahlsollwertsignals (n_{Soll}).

## Claims

1. A hydraulic lifting device for battery operated load-handling trucks, with at least one hydraulic lifting cylinder (20), with a hydraulic pump (12) which in the load lifting operation functions as a pump, which supplies the lifting cylinder with pressure means and in the load lowering operation functions as a motor and which is driven by the pressure means displaced from the lifting cylinder (20), with a direct current or three-phase asynchronous machine (10, 10a) which is coupled to the hydraulic pump (12) and which in the load lifting operation functions as an electric motor and in the load lowering operation functions as a generator, with a useful braking circuit fed by the machine (10, 10a) in the load lowering operation, with a valve arrangement (18) in the pressure means path between the lifting cylinder (20) and the hydraulic pump (12), with a control device which controls the valve arrangement and which comprises a rotational speed control means influencing the rotational speed of the machine (10, 10a), and with at least one further hydraulic consumer which can be connected to a hydraulic pump via an allocated control valve, wherein the further hydraulic consumer (22) via the valve arrangement (18) is supplied by the hydraulic pump (12) and the electric machine is controlled in its rotational speed by the rotational speed control means in dependence on the actuation of the valve arrangement (18), characterised in that the lowering branch (28) is arranged between the valve arrangement (18) and a connection between a return valve (16) and the entrance of the hydraulic pump (12).

2. A lifting device according to claim 1, characterised in that the electric machine (10) is an externally excited direct current machine.

3. A lifting device according to claim 1 or 2, characterised in that in the lowering branch (28) there is arranged a hydraulic pressure limiter (30) at which at certain operating points the complete hydraulic pressure falls so that the pressure limiter assumes the load.

4. A lifting device according to claim 3, characterised in that the pressure limiter is formed by a pressure balance (30) controlled by the volume flow and the differential pressure of the valve arrangement (18).

5. A lifting device according to claim 3 or 4, characterised in that between the pressure limiter (30) and the hydraulic pump (12) there is arranged a switch valve (32) in the lowering branch (28) which in one switch position connects the lowering branch (28) to the sump (14) of the hydraulic pump (12) when pressure or volume in the lowering branch are smaller than is required for the supply of the further hydraulic consumer (22).

6. A lifting device according to one of claims 2 to 5, characterised in that a separate field current control means (66, 68) is provided with a nominal value outputter (62) which from predetermined relationships of rotational speed (n_{act}) and armature current (I_{Anom}) evaluates the nominal value for the field current (I_{Fnom}), to the field winding (57a) and to the armature there are allocated power switches (T1 to T3) which can be set by the control means and whose arrangement and triggering set the size and direction of the current through the armature and field winding and the control means comprises a direction outputter (44, 46) for lifting and lowering.

7. A lifting device according to claim 6, characterised in that the rotational speed nominal value outputter for the rotational speed control means is a potentiometer (46) whose actuator (44) is allocated to microswitches producing direction signals (S1, S2).

8. A lifting device according to claim 6 or 7, characterised in that the field current nominal value outputter (62) determines the nominal value for the field current (I_{Fnom}) from the armature nominal value (I_{Anom}) and the actual rotational speed (n_{act}).

9. A lifting device according to one of the claims 6 to 8, characterised in that the armature via a semi-bridge (51) of Mosfets (T1, T2) is connected to the battery (53), wherein to the Mosfets (Tl, T2) there are connected diodes (54a, 55a) in an anti-parallel manner and the Mosfets (Tl, T2) are triggered cyclically.

10. A lifting device according to claim 1, characterised in that the electrical machine (10a) is a three-phase synchronous machine operated via a frequency converter and the rotational speed control means (70) controls the stator frequency in dependence on the control deviation evaluated from the rotational speed actual value (n_{act}) and the predetermined rotational speed nominal value, and the control means comprises a direction outputter for lifting and lowering.

11. A lifting device according to one of the claims 1 to 10 for a lifting mast, with at least one traversable mast part whose load accommodating means is height adjustable on the traversable mast part, characterised in that a sensor (42a) is provided on the lifting mast which determines whether there is effected a lowering procedure of the traversable mast part (mast lift) or of the load accommodating means (free lift) and whose signals are given to a rotational speed nominal value outputter (42) for modifying the rotational speed nominal value signal (nₙₒₘ).

## Revendications

1. Dispositif hydraulique de levage pour chariots de manutention actionnés par batterie d'accumulateur, comportant au moins un vérin hydraulique de levage (20), une pompe hydraulique (12) travaillant comme pompe lors du fonctionnement de levage de la charge, alimentant le vérin de levage (20) en fluide sous pression et travaillant en moteur lors du fonctionnement d'abaissement de la charge en étant entraînée par le fluide sous pression déplacé par le vérin de levage (20), une machine à courant continu ou de type asynchrone à courant triphasé (10, 10a) travaillant comme moteur électrique lors du fonctionnement de levage de la charge et comme générateur lors du fonctionnement d'abaissement de la charge, un circuit électrique de freinage à récupération, alimenté par la machine (10, 10a) lors du fonctionnement d'abaissement de la charge, un dispositif de soupapes (18), situé dans le circuit du fluide sous pression, entre le vérin de levage (20) et la pompe hydraulique (12), un dispositif de commande commandant le dispositif de soupapes, ce dispositif de commande comprenant un dispositif de régulation de la vitesse de rotation agissant sur la vitesse de rotation de la machine (10, 10a), et au moins un autre utilisateur hydraulique, qui peut être raccordé à une pompe hydraulique par l'intermédiaire d'une soupape de commande associée, cet autre utilisateur hydraulique (22) étant alimenté par la pompe hydraulique (12) par l'intermédiaire du dispositif de soupapes (18), et la vitesse de rotation de la machine électrique étant réglée par le dispositif de régulation de la vitesse de rotation en fonction de l'actionnement du dispositif de soupape (18),
caractérisé en ce que la branche (28) correspondant à l'abaissement est prévue entre le dispositif de soupapes (18) et une liaison reliant un clapet anti-retour (16) et l'entrée de la pompe hydraulique (12).

2. Dispositif de levage suivant la revendication 1, caractérisé en ce que la machine électrique (10) est une machine à courant continu à excitation indépendante.

3. Dispositif de levage suivant la revendication 1 ou la revendication 2, caractérisé en ce que, dans la branche correspondant à l'abaissement (28), est disposé un limiteur de pression hydraulique (30), sur lequel, en des points de fonctionnement déterminés, la pression hydraulique totale est abaissée de façon à assurer le maintien de la charge.

4. Dispositif de levage suivant la revendication 3, caractérisé en ce que le limiteur de pression est constitué par une balance de pression (30) commandée par le débit volumique et la différence de pression du dispositif de soupapes (18).

5. Dispositif de levage suivant la revendication 3 ou la revendication 4, caractérisé en ce qu'entre le limiteur de pression (30) et la pompe hydraulique (12), est disposé, dans la branche de dérivation correspondant à l'abaissement (28), un distributeur de commande (32) qui, dans une position de commande, relie au réservoir (14) de la pompe hydraulique (12) la branche de dérivation (28) correspondant à l'abaissement si la pression et le débit dans la branche de dérivation correspondant à l'abaissement sont inférieurs à ce qui est nécessaire pour alimenter l'autre utilisateur hydraulique (22).

6. Dispositif de levage suivant l'une des revendications 2 à 5, caractérisé en ce qu'un dispositif séparé (66, 68) de régulation du courant d'inducteur est prévu, comportant un générateur (62) de valeur de consigne, dispositif qui fournit, à partir de conditions prédéfinies de la vitesse de rotation (nᵢₛₜ) et du courant d'induit (I_{ASoll}), la valeur de consigne pour le courant inducteur (I_{FSoll}), en ce qu'à l'enroulement d'inducteur (57a) et à l'induit sont associés des interrupteurs de puissance (T1 à T3), qui peuvent être positionnés par le dispositif de régulation, et dont la disposition et la commande prédéfinissent l'intensité et la direction du courant traversant l'induit et l'enroulement d'inducteur et en ce que le dispositif de commande présente un manipulateur de direction (44, 46) pour lever et abaisser.

7. Dispositif de levage suivant la revendication 6, caractérisé en ce que le générateur de valeur de consigne de la vitesse de rotation est un potentiomètre (46) dont l'organe de commande (44) est associé à des microcommutateurs fournissant des signaux de direction (S1, S2).

8. Dispositif de levage suivant la revendication 6 ou la revendication 7, caractérisé en ce que le générateur (62) de valeur de consigne du courant inducteur détermine la valeur de consigne pour le courant inducteur (I_{FSoll}) à partir de la valeur de consigne du courant induit (I_{ASoll}) et de la valeur réelle de la vitesse de rotation (n_{Ist}).

9. Dispositif de levage suivant l'une des revendications 6 à 8, caractérisé en ce que l'induit est raccordé, par l'intermédiaire d'un demi-pont (51) constitué de Mosfets (T₁, T₂), à la batterie (53), des diodes étant branchées de façon anti-parallèle avec les Mosfets (T₁, T₂) et les Mosfets étant commandés de façon cyclique.

10. Dispositif de levage suivant la revendication 1, caractérisé en ce que la machine électrique (10a) est une machine asynchrone à courant triphasé, alimentée par l'intermédiaire d'un convertisseur de fréquence, en ce que le dispositif (70) de régulation de la vitesse de rotation règle la fréquence du stator en fonction de l'écart de régulation déterminé à partir de la valeur réelle de la vitesse de rotation (nᵢₛₜ) et de la valeur de consigne prédéfinie de la vitesse de rotation et en ce que le dispositif de commande présente un manipulateur de direction pour lever et abaisser.

11. Dispositif de levage suivant l'une des revendications 1 à 10 pour un mât de levage, comportant au moins une partie de mât mobile, dont le moyen de support de la charge, situé sur la partie mobile du mât, est réglable en hauteur, caractérisé en ce qu'il est prévu, sur le mât de levage, un détecteur (42a), qui détermine si a lieu un processus d'abaissement de la partie mobile du mât (course du mât) ou du moyen de support de la charge (course libre) et dont les signaux sont envoyés au générateur (42) de valeur de consigne de la vitesse de rotation, pour modifier le signal de valeur de consigne de la vitesse de rotation (nₛₒₗₗ).
